# EUROPÄISCHE PATENTANMELDUNG

(11) **EP 1 522 831 A1**
(43) Veröffentlichungstag der Anmeldung: **13.04.2005**
(21) Anmeldenummer: 04017340.3
(22) Anmeldetag: 22.07.2004
(51) Int. Cl.: G01G 19/18, G01G 19/393

(54) **Wiegeeinheit für eine Teilmengenwaage und Verfahren zu deren Herstellung**

(30) Priorität: 08.10.2003 DE 10346697
(71) Anmelder: Garvens Automation GmbH, 31180 Giesen (DE)
(72) Erfinder: Kliefoth, Rüdiger, 30952 Ronnenberg (DE)
(74) Vertreter: Patentanwälte Leinweber & Zimmermann

(57) **Zusammenfassung**

Eine Wiegeeinheit für eine Teilmengenwaage mit einer Grundplatte (9), einer damit verbundenen Wägezelle (10) und einem mit der Wägezelle (10) verbundenen Lastaufnahmeglied (20, 27) wird erfindungsgemäß derart ausgebildet, daß ihr Aufbau vereinfacht und ihre Montage erleichtert ist (Fig. 3).

## Beschreibung

Die Erfindung bezieht sich auf eine Wiegeeinheit für eine Teilmengenwaage mit einer Grundplatte und einer einen an der Grundplatte festgelegten Befestigungsbereich sowie einen mit einem Lastaufnahmeglied verbundenen Lasteinleitungsbereich aufweisenden Wägezelle, sowie auf ein Verfahren zur Herstellung einer derartigen Wiegeeinheit.

Der Zweck derartiger Teilmengenwaagen besteht bekanntlich darin, aus einem Wiegegut, das aus diskrete Gewichtswerte aufweisenden Teilen besteht, Chargen zu bilden, deren Gewicht einem vorgegebenen Zielgewicht möglichst nahekommt. Hierzu wird eine Anzahl von Wiegebehältern, deren jeder an einer Wiegeeinheit aufgehängt ist, mit Teilchargen des Wiegegutes befüllt. Aus den von den Wiegeeinheiten ermittelten Gewichtswerten der Teilchargen werden Gewichtskombinationen errechnet. Diejenigen Teilchargen, deren errechnete Gewichtskombination dem Zielgewicht am nächsten kommt, werden sodann zur Bildung der Charge zusammengeführt.

Im Stand der Technik sind zahlreiche Teilmengenwaagen mit für deren Zweckbestimmung ausgestalteten Wiegeeinheiten bekannt. Bei einer Wiegeeinheit der eingangs genannten Art (DE 39 14 192 A1 ) ist die Wägezelle mit ihrem Befestigungsbereich an Halteplatten eines Wägezellengehäuses festgelegt, aus dem ein Endbereich des Lastaufnahmeglieds herausragt. An diesem Endbereich ist der zur Aufnahme der zu wiegenden Teilchargen dienende Wiegebehälter aufgehängt. Dieser Aufbau ist allerdings kompliziert und mit einem hohen Montageaufwand verbunden. Insbesondere ist die Justierung der Wägezelle in bezug auf das Gehäuse mühsam.

Der Erfindung liegt die Aufgabe zugrunde, eine Wiegeeinheit der eingangs genannten Art zu schaffen, die hinsichtlich ihres Aufbaus, ihrer Montage und ihrer Justierung weniger aufwendig ist, sowie ein Verfahren zur Herstellung einer derartigen Wiegeeinheit anzugeben.

In vorrichtungsmäßiger Hinsicht wird diese Aufgabe dadurch gelöst, daß sich das Lastaufnahmeglied axial durch eine in der Grundplatte ausgebildete Öffnung hindurch erstreckt, deren das Lastaufnahmeglied azimutal umschließender Öffnungsrand von dem Lastaufnahmeglied allseitig radial beabstandet ist.

Durch die Festlegung der Wägezelle an der erfindungsgemäß gestalteten Grundplatte vereinfacht sich der Aufbau und die Montage der Wiegeeinheit ganz erheblich, weil die genaue Ausrichtung des Lastaufnahmeglieds in bezug auf die in der Grundplatte ausgebildete Öffnung schon am Anfang des gesamten Montagevorgangs erfolgen kann, indem die zueinander auszurichtenden Teile gut zugänglich sind. Insbesondere bedarf es keiner Ausrichtung in bezug auf ein Gehäuse. Die aus der Wägezelle, dem Lastaufnahmeglied und der Grundplatte bestehende Untereinheit kann für sich sofort geprüft werden. Sie kann für sich als Ersatzteil zur Verfügung gestellt werden, das der Betreiber der Teilmengenwaage ohne Schwierigkeit selbst auswechseln kann. In der Regel ist die Grundplatte rechteckig ausgebildet. Die Wägezelle beruht in der Regel auf einem quaderförmigen Biegebalken, an dessen einem Ende der Befestigungsbereich und an dessen dazu entgegengesetztem Ende der Lasteinleitungsbereich angeordnet ist, oder einer Parallelogrammführung mit einem den Befestigungsbereich aufweisenden Parallelogrammschenkel, einem den Lasteinleitungsbereich aufweisenden Parallelogrammschenkel und zwei die beiden Parallelogrammschenkel verbindenden Parallelogrammlenkern. Derartige Ausgestaltungen der Wägezelle sind dem Fachmann vertraut. Wenn auf den Lasteinleitungsbereich eine Kraft einwirkt, verformen sich Bereiche des Biegebalkens bzw. der Parallelogrammführung. In diesen Bereichen sind in bekannter Weise Dehnungsmeßstreifen angeordnet, die es ermöglichen, ein der Krafteinwirkung entsprechendes elektrisches Meßsignal zu gewinnen.

In einer zweckmäßigen Ausführungsform ist vorgesehen, daß die Öffnung und das Lastaufnahmeglied in seinem sich durch die Öffnung erstreckenden Bereich zylindrisch ausgebildet sind. In diesem Fall werden die zylindrische Öffnung und der zylindrische Bereich des Lastaufnahmeglieds zueinander koaxial angeordnet. Zwischen dem zylindrischen Außenmantel des Lastaufnahmeglieds und dem zylindrischen Innenmantel der Öffnung besteht dann ein kreisringförmiger Spielraum. Bei der Montage kann zur gegenseitigen Ausrichtung auf den zylindrischen Bereich des Lastaufnahmeglieds eine diesem kreisringförmigen Spielraum entsprechende Montagelehre aufgesteckt und in die Öffnung eingesetzt werden. In diesem ausgerichteten Zustand wird sodann das Lastaufnahmeglied an der Grundplatte befestigt. Danach wird die Montagelehre wieder entfernt. Dies ermöglicht auf sehr einfache und schnelle Weise eine genaue gegenseitige Ausrichtung.

Eine alternative oder auch zusätzliche zweckmäßige Ausbildung besteht darin, daß eine sich zwischen dem Öffnungsrand und dem Lastaufnahmeglied erstreckende, axial auslenkbare Membrane vorgesehen ist. Diese Membrane verschließt den zwischen der Öffnung und dem Lastaufnahmeglied bestehenden freien Spielraum, wodurch die Wiegeeinheit von der Seite der Grundplatte her vollständig geschlossen und dadurch gegen das Eindringen von Verunreinigungen geschützt ist. Wegen der axialen Auslenkbarkeit der Membrane ist die durch eine Lasteinleitung bedingte geringfügige Auslenkung des Lasteinleitungsbereichs der Wägezelle dennoch nicht behindert. Außerdem unterstützt die Membrane die Ausrichtung der Wägezelle in bezug auf die Grundplatte bei der Montage, indem das mit der Wägezelle verbundene Lastaufnahmeglied in eine die Membrane nach innen hin begrenzende innere Öffnung der Membrane hindurchgeführt wird, die mit ihrem Rand formschlüssig an dem Lastaufnahmeglied anliegt und dadurch eine Ausrichtung zwischen der Öffnung der Grundplatte und dem Lastaufnahmeglied bewirkt.

Zweckmäßigerweise ist vorgesehen, daß die Membrane an einem an den Öffnungsrand angrenzenden Bereich der Grundplatte festgespannt ist. Hierbei ist die Membrane etwas größer als die Öffnung, so daß ein radial äußerer Randbereich der Membrane den an den Öffnungsrand angrenzenden Bereich der Grundplatte überlappt. Die Membrane kann daher leicht an der einen Seite der Grundplatte festgelegt werden, bevor auf der anderen Seite der Grundplatte die Wägezelle befestigt wird. In diesem Zusammenhang erweist es sich als besonders zweckmäßig, daß ein der Festspannung der Membrane dienender Ring vorgesehen ist, der das Lastaufnahmeglied in einem radialen Abstand azimutal umgibt.

Im Rahmen der Erfindung ist weiterhin vorgesehen, daß ein zwischen dem Lasteinleitungsbereich der Wägezelle und der Grundplatte wirksamer Begrenzer für den Auslenkweg des Lasteinleitungsbereichs vorgesehen ist. Dieser Begrenzer schützt die Wägezelle vor Überlastungen durch Krafteinwirkungen, die andernfalls die Höchstbelastbarkeit der Wägezelle überschreiten würden, indem sie zu große Auslenkungen hervorrufen würden. Derartige eine Überbelastung bildende Krafteinwirkungen können beispielsweise durch irreguläre Umgebungseinwirkungen, beispielsweise irreguläre Stöße oder Schläge auf das Lastaufnahmeglied oder damit verbundene Teile, hervorgerufen werden. Die Anordnung des Begrenzers zwischen dem Lasteinleitungsbereich und der Grundplatte ermöglicht seine Anbringung in einem frühen Montagezustand und erleichtert dadurch die Einstellung des durch den Begrenzer freigegebenen Auslenkspiels.

Eine zweckmäßige weitere Ausgestaltung dieser Ausführungsform besteht darin, daß der Begrenzer zwei in der Richtung des Auslenkweges aufeinander ausgerichtete und mit gegenseitigem Spiel ineinandergreifende Anschlagbereiche aufweist, deren einer in bezug auf die Grundplatte und deren anderer in bezug auf den Lasteinleitungsbereich festgelegt ist. Hierbei greifen die beiden Anschlagbereiche nach Art eines Kolbens und eines Zylinders ineinander, wobei jedoch das gegenseitige Spiel sowohl in der axialen Richtung des Auslenkwegs als auch in der dazu orthogonalen Richtung vorhanden ist. Dadurch werden die Auslenkungen in der axialen Krafteinleitungsrichtung begrenzt, wie sie beispielsweise durch irreguläre Seitenstöße hervorgerufen sein könnten.

Im Hinblick auf die Anbringung von zur Signalerfassung und Signalverarbeitung dienenden elektrischen und elektronischen Bauteilen und/oder zur Festlegung von schützenden Abdeckungen ist es weiterhin zweckmäßig, daß zwischen dem Befestigungsbereich der Wägezelle und der Grundplatte ein mit Montagepositionen versehenes Teil festgespannt ist. An diesem Teil, das gleichzeitig mit der Ausrichtung und Befestigung der Wägezelle an der Grundplatte festgelegt wird, können in einer nachfolgenden Montagestufe die erwähnten Bauteile oder Abdeckungen befestigt werden.

Für ähnliche Zwecke ist es in weiteren Ausgestaltungen von Nutzen, daß an dem Lastaufnahmeglied ein mit Montagepositionen versehenes Teil festgespannt ist sowie daß über der der Grundplatte entgegengesetzten Seite der Wägezelle ein auf der Grundplatte mit axialen Tragbolzen abgestütztes und mit Montagepositionen versehenes Teil angeordnet ist.

Ein zur Lösung der eingangs genannten Aufgabe geeignetes Verfahren zur Herstellung einer Wiegeeinheit für eine Teilmengenwaage, bei dem eine Grundplatte und eine einen an der Grundplatte festlegbaren Befestigungsbereich sowie einen mit einem Lastaufnahmeglied verbindbaren Lasteinleitungsbereich aufweisende Wägezelle bereitgestellt werden, zeichnet sich erfindungsgemäß dadurch aus, daß man das Lastaufnahmeglied mit dem Lasteinleitungsbereich der Wägezelle verbindet, danach das Lastaufnahmeglied durch eine in der Grundplatte ausgebildete Öffnung hindurchführt, bis der Befestigungsbereich der Wägezelle in seine Befestigungsposition in bezug auf die Grundplatte gelangt und das Lastaufnahmeglied einen allseitigen radialen Abstand zu dem das Lastaufnahmeglied azimutal umschließenden Öffnungsrand einnimmt, und anschließend in dieser Stellung die Festlegung des Befestigungsbereichs der Wägezelle an der Grundplatte ausführt.

Zweckmäßige Ausgestaltungen des erfindungsgemäßen Verfahrens sind in den abhängigen Ansprüchen 12 bis 14 angegeben. Mit dem erfindungsgemäßen Verfahren und seinen zweckmäßigen Varianten erreichbare Vorteile gehen aus der vorliegenden Darlegung der vorrichtungsmäßigen Ausgestaltung der Erfindung hervor. Hierauf wird verwiesen.

In der folgenden Beschreibung wird die Erfindung anhand von Ausführungsbeispielen unter Bezugnahme auf die Zeichnung weiter erläutert. Es zeigen:
- Fig. 1: eine seitliche Aufsicht einer Ausführungsform einer erfindungsgemäßen Wiegeeinheit,
- Fig. 2: eine Schnittansicht längs der Linie II-II in Fig. 1,
- Fig. 3: eine Schnittansicht längs der Linie III-III in Fig. 2 bei abgenommenem Gehäuse, und
- Fig. 4: eine Schnittansicht längs der Linie IV-IV in Fig. 3.

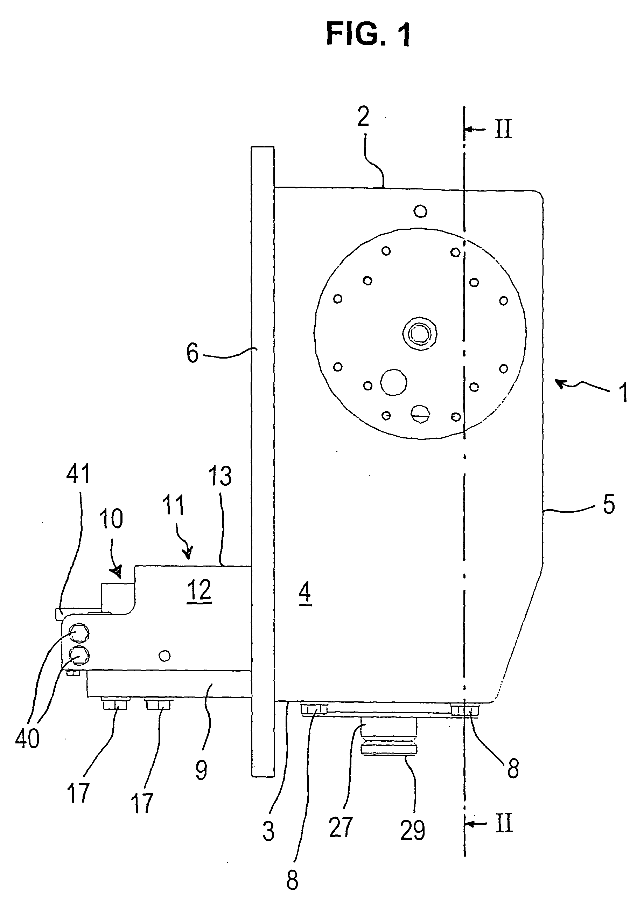

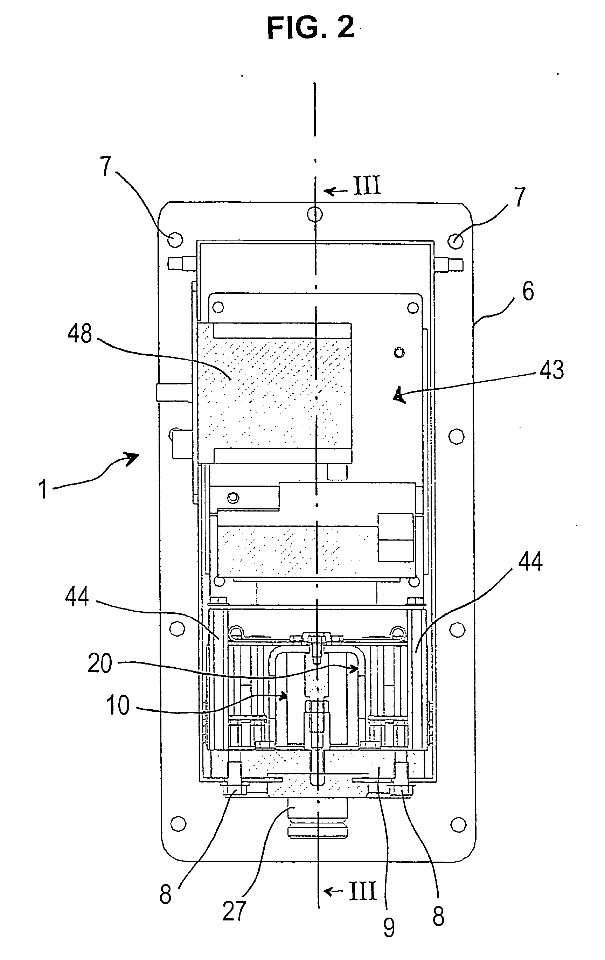

Eine in der Zeichnung dargestellte Ausführungsform einer erfindungsgemäßen Wiegeeinheit für eine Teilmengenwaage ist gemäß Fig. 1 und 2 mit einem Gehäuse 1 versehen, das im wesentlichen die Grundform eines einseitig leicht abgeschrägten Quaders aufweist, der von einer in Fig. 1 oberen rechteckigen Gehäusewand 2, einer in Fig. 1 unteren rechteckigen Gehäusewand 3, die sich beide orthogonal zur Zeichnungsebene von Fig. 1 erstrecken, zwei zur Zeichnungsebene von Fig. 1 parallelen seitlichen Gehäusewänden 4, welche die obere Gehäusewand 2 und die untere Gehäusewand 3 miteinander verbinden, und einer zur Zeichnungsebene von Fig. 1 orthogonalen vorderen Gehäusewand 5, welche die obere Gehäusewand 2 und die untere Gehäusewand 3 verbindet, begrenzt ist. Das Gehäuse 1 ist an seiner der vorderen Seitenwand 5 gegenüberliegenden Seite offen und mit einem umlaufenden Befestigungsflansch 6 versehen, der sich von der oberen und unteren Gehäusewand 2, 3 sowie den beiden seitlichen Gehäusewänden 4 aus orthogonal zu diesen Gehäusewänden erstreckt. Die vordere Gehäusewand 5 verläuft von dem dem Befestigungsflansch 6 entgegengesetzten Ende der unteren Gehäusewand 3 aus unter Bildung der Abschrägung in einem stumpfen Winkel zur Ebene des Befestigungsflansches 6, bis sie etwa im unteren Viertel des Abstandes zwischen der unteren Gehäusewand 3 und der oberen Gehäusewand 2 unter einem stumpfen Winkel abgeknickt ist und von dort aus parallel zur Ebene des Befestigungsflansches 6 bis zur oberen Gehäusewand 2 verläuft. In Fig. 2 erstreckt sich der Befestigungsflansch 6 parallel zur Zeichnungsebene. In dieser Ansicht sind Befestigungslöcher 7 erkennbar. Beim Einbau der Wiegeeinheit in eine Teilmengenwaage wird das Gehäuse 1 mit seiner in Fig. 2 zum Betrachter weisenden Seite des Befestigungsflansches 6 auf einen mit einer entsprechenden Ausnehmung versehenen Mantelbereich eines mit seiner Achse vertikal ausgerichteten prismatischen Tragkörpers einer Teilmengenwaage aufgesetzt und daran mit die Befestigungslöcher 7 durchsetzenden Bolzen festgeschraubt.

In dem Gehäuse ist an der unteren Gehäusewand 3 mit Hilfe von Schraubbolzen 8 eine rechteckige Grundplatte 9 festgelegt, die sich parallel zur unteren Gehäusewand 3 erstreckt und aus dem Gehäuse 1 an dessen flanschseitigem offenen Ende herausragt. Dieser herausragende Teil liegt innerhalb des prismatischen Tragkörpers, wenn die Wiegeeinheit an der Teilmengenwaage montiert ist. Die Fig. 1 und 2 lassen ferner teilweise eine an der Grundplatte 9 angeordnete Wägezelle 10 und eine Abdeckung 11 erkennen, welche die Wägezelle 10 in einem Abstand mit zwei zu den seitlichen Gehäusewänden 4 parallelen Seitenwänden 12 und einer zur Grundplatte 9 parallelen oberen Seitenwand 13 U-förmig umgibt, wobei die U-Schenkel mit ihren freien Enden zur Grundplatte 9 hin gerichtet sind.

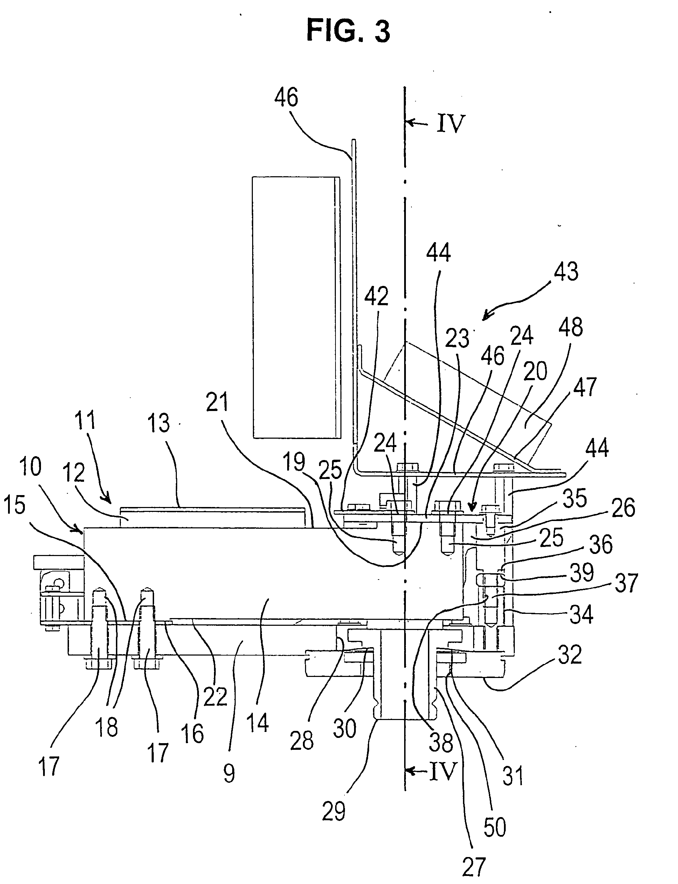

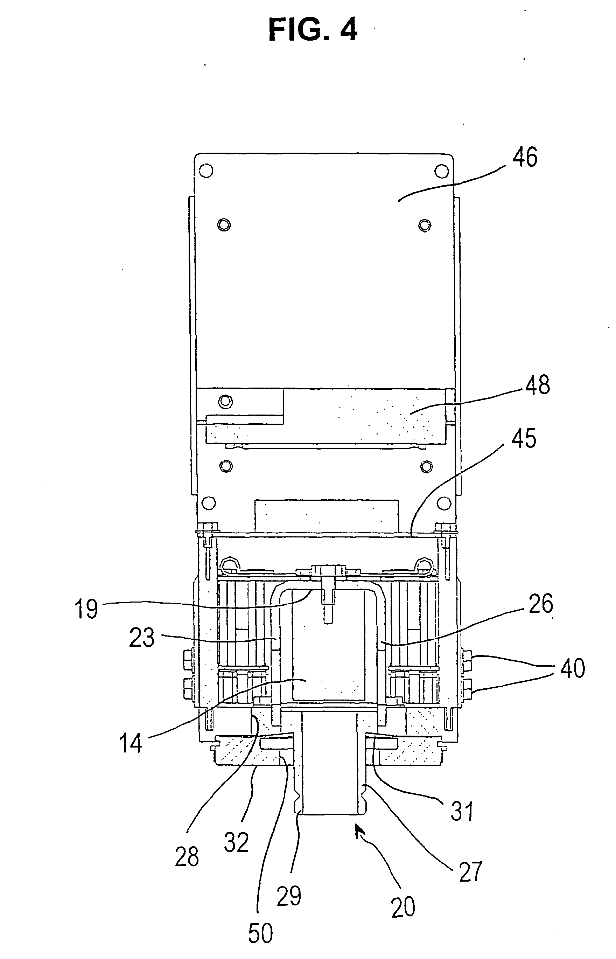

Diese Anordnung ist in den Fig. 3 und 4 vollständiger sichtbar, da in diesen beiden Figuren das Gehäuse 1 entfernt worden ist. Insbesondere geht aus den Fig. 3 und 4 hervor, daß bei der dargestellten Ausführungsform die Wägezelle 10 in der Form eines Biegebalkens 14 ausgebildet ist, dessen Längsachse sich parallel zur Zeichnungsebene von Fig. 3 und parallel zur Grundplatte 9 erstreckt und dessen zur Zeichnungsebene von Fig. 3 senkrechter Querschnitt rechteckig ist. Aus Fig. 4 ist ersichtlich, daß sich die größere Abmessung dieses Rechteckquerschnitts orthogonal zur Grundplatte 9 und dessen kleinere Abmessung parallel zur Grundplatte 9 erstreckt. An seinem aus dem Gehäuse 1 herausragenden Ende weist der Biegebalken 14 einen zur Grundplatte 9 weisenden und zu dieser parallelen Befestigungsbereich 15 auf. Mit diesem Befestigungsbereich 15 liegt der Biegebalken 14 auf einem plattenförmigen Teil 16 auf, das seinerseits auf der Grundplatte 9 aufliegt. Die drei zuletzt genannten Teile sind durch zwei Schraubbolzen 17 zusammengespannt, welche die Grundplatte 9 von ihrer dem Biegebalken 14 entgegengesetzten Seite her durchsetzen, durch entsprechende Öffnungen des plattenförmigen Teils 16 hindurchgeführt sind und in Gewindebohrungen 18 eingeschraubt sind, die in dem betreffenden Endbereich des Biegebalkens 14 ausgebildet sind.

An seinem dem Befestigungsbereich 15 entgegengesetzten Ende weist der Biegebalken 14 einen in den Fig. 2, 3 und 4 erkennbaren Lasteinleitungsbereich 19 auf, an dem ein Lastaufnahmeglied 20 festgelegt ist. Dieser Lasteinleitungsbereich 19 ist an der der Grundplatte 9 entgegengesetzten Rechteckseite des Biegebalkens 14 ausgebildet. Der verbleibende Bereich 21 dieser Rechteckseite ist gegenüber dem Lasteinleitungsbereich 19 geringfügig in Richtung auf die Grundplatte 9 zurückgesetzt. Ebenso ist der verbleibende Bereich 22 der den Befestigungsbereich 15 aufweisenden Rechteckseite des Biegebalkens 14 gegenüber dem Befestigungsbereich 15 in Richtung auf den Bereich 21 geringfügig zurückgesetzt.

Das Lastaufnahmeglied 20 weist einen U-förmigen Bereich auf, dessen U-Steg 23 auf dem Lasteinleitungsbereich 19 aufliegt und dort mit zwei Schraubbolzen 24 festgelegt ist, die durch in dem U-Steg 23 ausgebildete Öffnungen hindurchgeführt und in entsprechende Gewindebohrungen 25 des Biegebalkens 14 eingeschraubt sind. Von dem U-Steg 23 aus erstrecken sich beidseits des Biegebalkens 14 und in einem Abstand dazu die beiden U-Schenkel 26 parallel zu den zu der Grundplatte 9 orthogonalen Rechteckseiten des Biegebalkens 14 bis zu einem zylindrisch ausgebildeten Bereich 27 des Lastaufnahmeglieds 20, dessen Zylinderachse sich orthogonal zur Grundplatte 9 erstreckt und dessen zum Biegebalken 14 weisende Stirnfläche von dem Biegebalken 14 geringfügig beabstandet ist.

In der Grundplatte 9 ist eine zu dem zylindrischen Bereich 27 koaxiale Öffnung 28 ausgebildet, zu der der zylindrische Bereich 27 des Lastaufnahmeglieds 20 allseitig unter demselben radialen Abstand angeordnet ist. Der zylindrische Bereich 27 ist als Stufenzylinder mit einer radialen Schulter ausgebildet, die eine zum freien Ende 29 des zylindrischen Bereichs 27 weisende ringförmige Anschlagfläche 30 bildet. An dieser Anschlagfläche 30 liegt der radial innere Rand einer axial auslenkbaren, ringförmigen Membrane 31 an. Der radial äußere Rand der Membrane 31 ist durch einen zu dem zylindrischen Bereich 27 koaxialen Ring 32 auf der dem Biegebalken 14 entgegengesetzten Seite der Grundplatte 9 an deren an den Rand der Öffnung 28 angrenzenden Bereich festgespannt. Das freie Ende 29 des zylindrischen Bereichs 27 ragt axial über die der Grundplatte 9 entgegengesetzte radiale Stirnseite des Rings 32 hinaus und dient zur Ankopplung eines Wiegebehälters (nicht dargestellt).

Sowohl die Grundplatte 9 als auch der U-Steg 23 des Lastaufnahmeglieds 20 ragen über das den Lasteinleitungsbereich 19 aufweisende Ende des Biegebalkens 14 hinaus. Zwischen diesen hinausragenden Bereichen des U-Stegs 23 und der Grundplatte 9 ist ein sich orthogonal dazu erstreckender Begrenzer 33 angeordnet, der als Überlastschutz dient. Der Begrenzer 33 weist ein mit der Grundplatte 9 verschraubtes hohlzylindrisches Teil 34 und ein zu dem hohlzylindrischen Teil 34 komplementäres, mit dem U-Steg 23 verschraubtes Teil 35 auf. Dieses komplementäre Teil 35 greift mit einem an einer radialen Schulter 36 radial verjüngten Bereich 37 unter radialem Spiel in den inneren Hohlraum 38 des hohlzylindrischen Teils 34 ein. Durch diese Anordnung sind das hohlzylindrische Teil 34 und das dazu komplementäre Teil 35 in der Richtung des Auslenkweges des Biegebalkens 14 aufeinander ausgerichtet. Die radiale Schulter 36 des komplementären Teils befindet sich in der Ruhestellung des Biegebalkens 14 in einem Abstand zu dem ihr zugewandten axialen Ende 39 des hohlzylindrischen Teils 34. Dadurch wirken die radiale Schulter 36 und das axiale Ende 39 als Anschlagbereiche, die den Auslenkweg des Biegebalkens 14 auf den dazwischen eingestellten Abstand begrenzen. Gleichzeitig ermöglicht das zwischen dem Hohlraum 38 und dem in diesen Hohlraum eingreifenden Bereich 37 bestehende radiale Spiel die freie Auslenkbarkeit des Biegebalkens 14 in der Richtung des Auslenkwegs.

Das zwischen der Grundplatte 9 und dem Befestigungsbereich 15 des Biegebalkens 14 eingespannte plattenförmige Teil 16 ist in einem Abstand zu den zur Zeichnungsebene von Fig. 3 parallelen Seiten des Biegebalkens 14 abgebogen und erstreckt sich von dort aus von der Grundplatte 9 weg parallel zu diesen Seitenflächen nach oben. An diesen abgebogenen Bereichen des plattenförmigen Teils 16 ist die Abdeckung 11 mit Hilfe von Schrauben 40 befestigt. Außerdem sind auf an diesem plattenförmigen Teil 16 vorgesehenen Montagepositionen Steckerplatinen 41 für die elektrische Beschaltung der Wägezelle 10 angeordnet.

Ein weiteres plattenförmiges Teil 42 ist an einem über den Lasteinleitungsbereich 19 in Richtung auf das den Befestigungsbereich 15 aufweisende Ende des Biegebalkens 14 hinausragenden Bereich des U-Stegs 23 des Lastaufnahmeglieds 20 festgeschraubt. Dieses weitere plattenförmige Teil 42 weist ebenfalls Montagepositionen zur Festlegung von Steckerplatinen auf.

Ferner lassen die Fig. 2 und 3 ein noch weiteres Teil 43 erkennen, das in einem Abstand über dem mit dem Lastaufnahmeglied 20 verbundenen Bereich des Biegebalkens 14 angeordnet und auf der Grundplatte 9 mit dazu orthogonalen Tragbolzen 44 abgestützt ist. Das Teil 43 weist einen mit den Tragbolzen 44 verbundenen Bereich 45 auf, der sich parallel zur Grundplatte 9 erstreckt, und einen daran anschließenden Bereich 46, der sich orthogonal zur Grundplatte 9 erstreckt. Zwischen den Bereichen 45, 46 erstreckt sich ein dachartig schräggestellter Bereich 47, auf dem die Hauptplatine 48 der Wägezellenelektronik angeordnet ist. Schließlich ist in Fig. 3 noch eine weitere U-förmige Abdeckung 49 angedeutet, die mit ihrem U-Steg parallel zu dem Bereich 46 des Teils 43 angeordnet ist.

Die Montage der Wiegeeinheit erfolgt derart, daß zunächst das Lastaufnahmeglied 20 mittels der Schraubbolzen 24 mit dem Biegebalken 14 verbunden wird. Ferner wird die Membrane 31 mit Hilfe des Rings 32 an der Öffnung 28 der Grundplatte 9 festgelegt. Weiter wird an der Grundplatte 9 das hohlzylindrische Teil 34 des Begrenzers 33 und an dem U-Steg 23 des Lastaufnahmeglieds 20 das dazu komplementäre Teil 35 des Begrenzers 33 grob vormontiert. Anschließend wird das Lastaufnahmeglied 20 mit seinem zylindrischen Bereich 27 durch die innere Öffnung der Membrane 31 hindurchgeführt und dabei der Befestigungsbereich 15 des Biegebalkens 14 in seine Befestigungsposition gebracht, in der das plattenförmige Teil 16 zwischen dem Befestigungsbereich 15 und der Grundplatte 9 eingefügt und der Biegebalken mittels der Schrauben 17 sodann an der Grundplatte 9 festgespannt werden kann. Dabei bewirkt der Eingriff zwischen der inneren Ringöffnung der Membrane 31 und dem sie durchsetzenden zylindrischen Bereich 27 des Lastaufnahmeglieds 20 die genaue Ausrichtung zwischen der Wägezelle 10 und der Grundplatte 9. Alternativ oder zusätzlich kann diese Ausrichtung auch dadurch herbeigeführt oder unterstützt werden, daß auf den zylindrischen Bereich 27 eine ringförmige Montagelehre aufgesetzt wird, durch die der radiale Abstand zwischen dem zylindrischen Bereich 27 und der inneren Ringöffnung 50 des Rings 31 eingestellt wird. In dieser ausgerichteten Stellung können sodann die Schraubbolzen 17 fest angezogen werden. Danach kann ggf. die verwendete Montagelehre wieder abgezogen werden. Ferner können die grob vormontierten Teile 34, 35 des Begrenzers 33 einjustiert und ihre Verschraubungen festgezogen werden. Anschließend werden an den Teilen 16, 42 und 43 die weiteren Bauteile montiert. Die so entstandene Einheit wird anschließend mit Hilfe der Schraubbolzen 8 in dem Gehäuse 1 festgelegt.

### Verzeichnis der Bezugszeichen

- 1: Gehäuse
- 2: obere Gehäusewand
- 3: untere Gehäusewand
- 4: seitliche Gehäusewand
- 5: vordere Gehäusewand
- 6: Befestigungsflansch
- 7: Befestigungslöcher
- 8: Schraubbolzen
- 9: Grundplatte
- 10: Wägezelle
- 11: Abdeckung
- 12: Seitenwand
- 13: obere Seitenwand
- 14: Biegebalken
- 15: Befestigungsbereich
- 16: plattenförmiges Teil
- 17: Schraubbolzen
- 18: Gewindebohrungen
- 19: Lasteinleitungsbereich
- 20: Lastaufnahmeglied
- 21: Bereich
- 22: Bereich
- 23: U-Steg
- 24: Schraubbolzen
- 25: Gewindebohrungen
- 26: U-Schenkel
- 27: zylindrischer Bereich
- 28: Öffnung
- 29: freies Ende
- 30: ringförmige Anschlagfläche
- 31: Membrane
- 32: Ring
- 33: Begrenzer
- 34: hohlzylindrisches Teil
- 35: komplementäres Teil

- 36: radiale Schulter
- 37: Bereich
- 38: Hohlraum
- 39: axiales Ende
- 40: Schrauben
- 41: Steckerplatine
- 42: plattenförmiges Teil
- 43: Teil
- 44: Tragbolzen
- 45: Bereich
- 46: Bereich
- 47: Bereich
- 48: Hauptplatine
- 49: Abdeckung
- 50: innere Ringöffnung

## Patentansprüche

1. Wiegeeinheit für eine Teilmengenwaage mit einer Grundplatte (9) und einer einen an der Grundplatte (9) festgelegten Befestigungsbereich (15) sowie einen mit einem Lastaufnahmeglied (20) verbundenen Lasteinleitungsbereich (19) aufweisenden Wägezelle (10), **dadurch gekennzeichnet, daß** sich das Lastaufnahmeglied (20) axial durch eine in der Grundplatte (9) ausgebildete Öffnung (28) hindurch erstreckt, deren das Lastaufnahmeglied (20) azimutal umschließender Öffnungsrand von dem Lastaufnahmeglied (20) allseitig radial beabstandet ist.

2. Wiegeeinheit nach Anspruch 1, **dadurch gekennzeichnet, daß** die Öffnung (28) und das Lastaufnahmeglied (20) in seinem sich durch die Öffnung (28) erstreckenden Bereich (27) zylindrisch ausgebildet sind.

3. Wiegeeinheit nach Anspruch 1 oder 2, **dadurch gekennzeichnet, daß** eine sich zwischen dem Öffnungsrand und dem Lastaufnahmeglied (20) erstreckende, axial auslenkbare Membrane (31) vorgesehen ist.

4. Wiegeeinheit nach Anspruch 3, **dadurch gekennzeichnet, daß** die Membrane (31) an einem an den Öffnungsrand angrenzenden Bereich der Grundplatte (9) festgespannt ist.

5. Wiegeeinheit nach Anspruch 4, **dadurch gekennzeichnet, daß** ein der Festspannung der Membrane (31) dienender Ring (32) vorgesehen ist, der das Lastaufnahmeglied (20) in einem radialen Abstand azimutal umgibt.

6. Wiegeeinheit nach einem der Ansprüche 1 bis 5, **dadurch gekennzeichnet, daß** ein zwischen dem Lasteinleitungsbereich (19) der Wägezelle (10) und der Grundplatte (9) wirksamer Begrenzer (33) für den Auslenkweg des Lasteinleitungsbereichs (19) vorgesehen ist.

7. Wiegeeinheit nach Anspruch 6, **dadurch gekennzeichnet, daß** der Begrenzer (33) zwei in der Richtung des Auslenkweges aufeinander ausgerichtete und mit gegenseitigem Spiel ineinandergreifende Anschlagbereiche (34, 35) aufweist, deren einer in bezug auf die Grundplatte (9) und deren anderer in bezug auf den Lasteinleitungsbereich (19) festgelegt ist.

8. Wiegeeinheit nach einem der Ansprüche 1 bis 7, **dadurch gekennzeichnet, daß** zwischen dem Befestigungsbereich (19) der Wägezelle (10) und der Grundplatte (9) ein mit Montagepositionen versehenes Teil (16) festgespannt ist.

9. Wiegeeinheit nach einem der Ansprüche 1 bis 8, **dadurch gekennzeichnet, daß** an dem Lastaufnahmeglied (20) ein mit Montagepositionen versehenes Teil (42) festgespannt ist.

10. Wiegeeinheit nach einem der Ansprüche 1 bis 9, **dadurch gekennzeichnet, daß** über der der Grundplatte (9) entgegengesetzten Seite der Wägezelle (10) ein auf der Grundplatte (9) mit axialen Tragbolzen (44) abgestütztes und mit Montagepositionen versehenes Teil (43) angeordnet ist.

11. Verfahren zur Herstellung einer Wiegeeinheit für eine Teilmengenwaage, bei dem eine Grundplatte (9) und eine einen an der Grundplatte (9) festlegbaren Befestigungsbereich (15) sowie einen mit einem Lastaufnahmeglied (20) verbindbaren Lasteinleitungsbereich (19) aufweisende Wägezelle (10) bereitgestellt werden, **dadurch gekennzeichnet, daß** man das Lastaufnahmeglied (20) mit dem Lasteinleitungsbereich (19) der Wägezelle (10) verbindet, danach das Lastaufnahmeglied (20) durch eine in der Grundplatte (9) ausgebildete Öffnung (28) hindurchführt, bis der Befestigungsbereich (15) der Wägezelle (10) in seine Befestigungsposition in bezug auf die Grundplatte (9) gelangt und das Lastaufnahmeglied (20) einen allseitigen radialen Abstand zu dem das Lastaufnahmeglied (20) azimutal umschließenden Öffnungsrand einnimmt, und anschließend in dieser Stellung die Festlegung des Befestigungsbereichs (15) der Wägezelle (10) an der Grundplatte (9) ausführt.

12. Verfahren nach Anspruch 11, **dadurch gekennzeichnet, daß** man zwischen dem Öffnungsrand und dem Lastaufnahmeglied (20) eine dem radialen Abstand entsprechende Montagelehre anbringt und nach der Festlegung des Befestigungsbereichs (15) an der Grundplatte (9) wieder entfernt.

13. Verfahren nach Anspruch 11 oder 12, **dadurch gekennzeichnet, daß** man vor der Hindurchführung des Lastaufnahmeglieds (20) durch die Öffnung (28) an der Öffnung (28) eine ringförmige Membrane (31) anbringt, deren innere Ringöffnung dem Querschnitt des Lastaufnahmeglieds in dessen die Öffnung (28) durchsetzendem Bereich (27) entspricht, und das Lastaufnahmeglied (20) durch die Ringöffnung hindurchführt.

14. Verfahren nach einem der Ansprüche 11 bis 13, **dadurch gekennzeichnet, daß** man vor der Festlegung des Befestigungsbereichs (15) zwischen diesen und die Grundplatte (9) ein mit Montagepositionen versehenes Teil (16) einlegt.
